# EUROPEAN PATENT APPLICATION

(11) **EP 3 100 946 A1**
(43) Date of publication of application: **07.12.2016**
(21) Application number: 16171702.0
(22) Date of filing: 27.05.2016
(51) Int. Cl.: B64C 1/06, B64D 11/00

(54) **STRUCTURE FOR FASTENING EQUIPMENT IN AIRCRAFT**

(30) Priority: 28.05.2015 RU 2015120324
(71) Applicant: Airbus Operations Limited, Bristol BS34 7PA (GB)
(72) Inventor: MAMUSHKIN, Dmitriy, 111672 Moscow (RU); BESPALOV, Ivan, 433514 Dimitrovgrad (RU)
(74) Representative: Teesdale, Emily Catherine

(57) **Abstract**

The invention pertains to the field of aviation, in particular, to a structure for fastening components of interior equipment in the passenger compartment of an airplane. The fastening structure contains fastening means produced on the fuselage; suspension elements (2) immovably connected to said fastening means, and at least one system support (1) running in the longitudinal direction of the fuselage, connected to the suspension elements (2). The suspension elements (2) include at least one first suspension element (9) and at least one second suspension element (10, 11), wherein each of the first suspension elements is rigidly connected to the system support, and each of the second suspension elements forms with the system support a sliding connection, so that the system support is able to slide relative to these second suspension elements along the longitudinal axis of the airplane fuselage. The sliding capability of the system support relative to the second suspension elements substantially reduces the load on the bulkhead in the longitudinal direction. 12 dependent claims, 13 illustrations.

## Description

The invention on the whole pertains to the installing of equipment on an aeroplane, in particular, a structure for fastening components of interior equipment in the passenger compartment of an aeroplane, which structure can be used aboard aircraft of different modifications.

Interior equipment, especially components of the electrical system and the air conditioning system in passenger compartments of an aeroplane, are generally secured above the ceiling area of the passenger compartment.

For example, application US 2011/0233336 Al describes a structure for fastening of equipment components in the passenger compartment of an aeroplane, containing brackets which connect the bulkheads to the stringers of the fuselage framework, and a system support fastened to these brackets in the form of a strip with a plurality of openings arranged uniformly along its length for connection to the components of the interior equipment.

In such a structure, the fastening must be individually matched up with the desired compartment configuration, so that such a fastening of components of the interior equipment results in relatively inflexible (not allowing for changes) compartment configurations. Any change in the compartment configuration makes it necessary to replace a large number of fastening components. Moreover, major changes in the compartment configuration can only be performed at special workplaces having a corresponding permit, which results in significant financial expenses and lengthy delays when changing the compartment configuration.

The closest prior art to the present invention is the structure for fastening of components of the interior equipment in the passenger compartment of an aeroplane according to patent RU 2433066 C2, containing at least one system support running in the longitudinal direction of the fuselage and formed from several consecutively connected profiles, and a means of suspension for connecting the system support to the elements of the fuselage framework, said system support having a plurality of fastening elements uniformly disposed along its length for connection to the components of the interior equipment.

Such a structure makes it possible to secure components of the interior equipment in the passenger compartment with greater flexibility of configuration as compared to the above-described structure.

However, this structure also has drawbacks:
- on account of increased displacements of the fuselage, loads in the direction of the system support are transmitted not only to the skin, but also to the bulkheads, which is undesirable for the fuselage structure;
- the structure of the system support contains a single closed circuit of profiles, which may result in difficulties in assembling the structure in certain places due to accumulation of tolerances (during fabrication, assembly, and so on).

The problem which the invention proposes to solve is to create a structure for fastening the components of interior equipment in the passenger compartment of an aeroplane which lacks the indicated drawbacks or at least reduces their influence.

This problem is solved in a prefabricated structure for fastening the components of equipment inside an airplane fuselage, containing fastening means produced on the fuselage; suspension elements immovably connected to said fastening means, and at least one system support running in the longitudinal direction of the fuselage, connected to the suspension elements.

According to the invention, the suspension elements include at least one first suspension element and at least one second suspension element, wherein each of the first suspension elements is rigidly connected to the system support, and each of the second suspension elements forms with the system support a sliding connection, so that the system support is able to slide relative to these second elements along the longitudinal axis of the airplane fuselage.

In such an embodiment, the system support has the capability of axial sliding with respect to certain (second) suspension elements, which significantly decreases the axial loads transmitted from the system support to the bulkheads.

Preferably, the system support is formed from several sequentially connected pieces. At least two pieces of the system support are joined together by means of a sliding connection, while the connections of the other pieces of the system support are rigid. As a result, the unified chain of pieces of the system support is broken up into smaller sections, joined together by means of the sliding connection, which makes it possible to join together two adjacent pieces of the system support with the possibility of adjusting their relative position and thereby compensate for tolerances occurring during the fabrication of the parts and during their assembly, as well as the deformation of the fuselage.

Preferably, at the locations of the sliding connections of the pieces of the system support, one of these pieces is connected to the first suspension element, while in the other locations the system support is connected to the second suspension elements.

Each piece of the system support can be made in the form of a profile having a U-shape in cross section.

Furthermore, each of the first suspension elements includes a first bracket, one end of which is rigidly connected to a corresponding fastening means produced on the fuselage, while the other end contains two sections, one of which is situated between the flanges of one profile and rigidly connected to these flanges by means of fastening means, while the other of these sections is situated between the flanges of the other profile and has a slot produced in it, through which passes a bolt likewise passing through corresponding openings in the flanges of said other profile.

To reduce friction in each of said sliding connections, a plastic sleeve can be arranged in the slot of the first bracket, through which the bolt passes.

This sleeve can be made of two parts, separated from each other along the axis of the bolt, while between the bolt and the plastic sleeve is arranged a rigid sleeve, the length of which is essentially equal to the distance between the outer surfaces of the flanges of the profile.

Each rigid connection of the profiles can be formed by means of two plates, each of which is fastened to corresponding flanges of abutting profiles, and in each of which longitudinal slots are made, wherein each of the suspension means in the locations of the rigid connections of the profiles includes a second bracket, one end of which is rigidly connected to a corresponding element of the fuselage framework, while the other end contains a section situated between said plates, and in this section there is produced an opening through which passes a bolt, likewise passing through corresponding slots in the plates.

In order to reduce friction, a rigid sleeve can be seated on the bolt, the length of which exceeds the distance between the outer surfaces of said two plates, and one plastic sleeve each is placed in the slots of these two plates, through which passes the bolt with the rigid sleeve seated thereon.

Preferably the second suspension elements include third brackets, one end of each being rigidly connected to corresponding fastening means produced on the fuselage, while the other end contains a section situated between the flanges of the corresponding profile, and in this section there is produced a slot through which passes the bolt likewise, passing through corresponding openings in the flanges of said profile.

A plastic sleeve can likewise be arranged in the slot of each of the third brackets, through which passes the bolt.

This sleeve can likewise consist of two parts, separated from each other along the axis of the bolt, while between the bolt and the plastic sleeve is arranged a rigid sleeve, the length of which is essentially equal to the distance between the outer surfaces of the flanges of the profile.

The prefabricated structure for fastening equipment components inside an airplane fuselage can contain at least one pair of parallel-arranged system supports, in particular, two pairs of parallel-arranged system supports, said pairs of system supports being arranged symmetrically with respect to the longitudinal vertical plane of symmetry of the airplane.

Preferably the system supports in each of the pairs are joined together by means of fittings, which are in turn connected by tie rods to elements of the fuselage framework, each fitting being disposed between parallel profiles, the flanges of which are rigidly connected to corresponding sections of the first brackets, while the tie rod is connected by one end to this fitting, and by the other end it is connected to the element of the fuselage framework to which the first bracket is rigidly connected.

These and other features and advantages of the invention will become clearer from the following detailed description with references to the drawings.
Figure 1 shows a fragment of a prefabricated structure for fastening of equipment components inside the fuselage of an airplane according to the invention, perspective view;
Fig. 2 shows feature A of Fig. 1;
Fig. 3 is the same, side view;
Fig. 4 is a section along D-D in Fig. 3;
Fig. 5 shows the first bracket separately, perspective view;
Fig. 6 shows feature B in Fig. 1;
Fig. 7 is the same, side view;
Fig. 8 is a section along E-E in Fig. 7;
Fig. 9 shows the second bracket separately, perspective view;
Fig. 10 shows feature C in Fig. 1;
Fig. 11 is the same, side view;
Fig. 12 is a section along F-F in Fig. 11;
Fig. 13 shows the third bracket separately, perspective view.

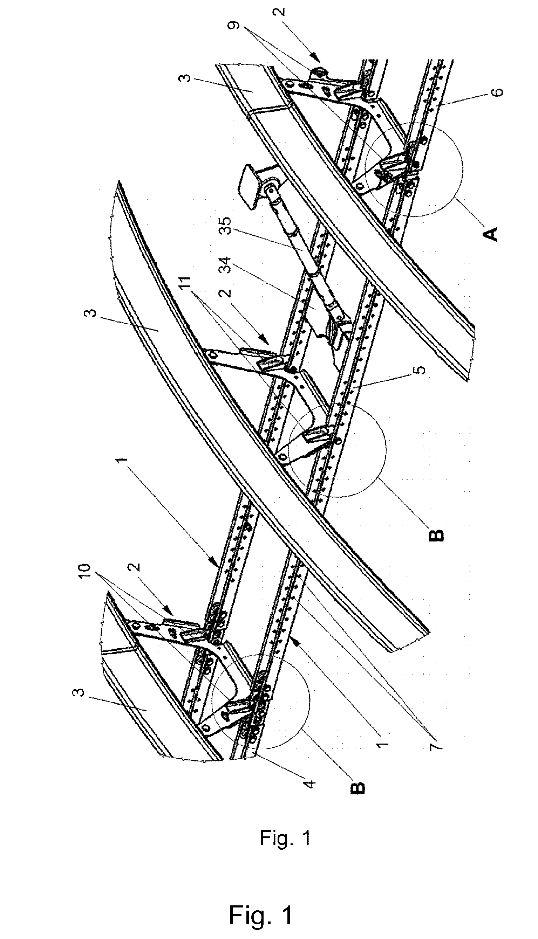

To facilitate understanding, Fig. 1 conventionally does not show the skin or the longitudinal composition of the fuselage framework.

As is shown in Fig. 1, the fastening structure according to one possible variant embodiment of the invention contains at least one pair of system supports 1, running in the longitudinal direction of the fuselage, and suspension elements 2 connecting the system supports 1 to elements of the fuselage framework, especially to the bulkheads 3.

Each of the system supports 1 is formed from several sequentially connected profiles, having a U-shape in cross section. Figure 1 shows a fragment of the structure with three such profiles 4, 5 and 6 in each of the system supports. On each of the profiles 4, 5 and 6 there is a plurality of fastening elements uniformly disposed along its length, for example in the form of openings 7. The profiles of each of the system supports are joined consecutively to an alternating sliding connection and at least one rigid connection. For example, the connections of the profiles in each of the system supports 1 can be arranged in the following sequence: "... - rigid - sliding - rigid - sliding - ...", or "... - rigid - rigid - sliding - rigid - rigid - sliding - ...", or "... - rigid - rigid - rigid - sliding - rigid - rigid - rigid - sliding - ...". The number of rigidly connected profiles between two adjacent sliding connections is chosen from the specific structure features of the fuselage framework.

Each of the suspension elements 2 includes a main bracket 8, fastened to a corresponding bulkhead 3, and two each of first, second or third brackets 9, 10 and 11, each of which is connected rigidly by one end to the main bracket 8, and by the other end it is joined to the corresponding system support 1. The first bracket 9 is disposed in location A of the sliding connection of profiles 5 and 6, the second bracket 10 at location B of the rigid connection of profiles 4 and 5, and the third bracket 11 at location C between the abutments of the profiles in the zone of transverse connection of the profiles of the two system supports.

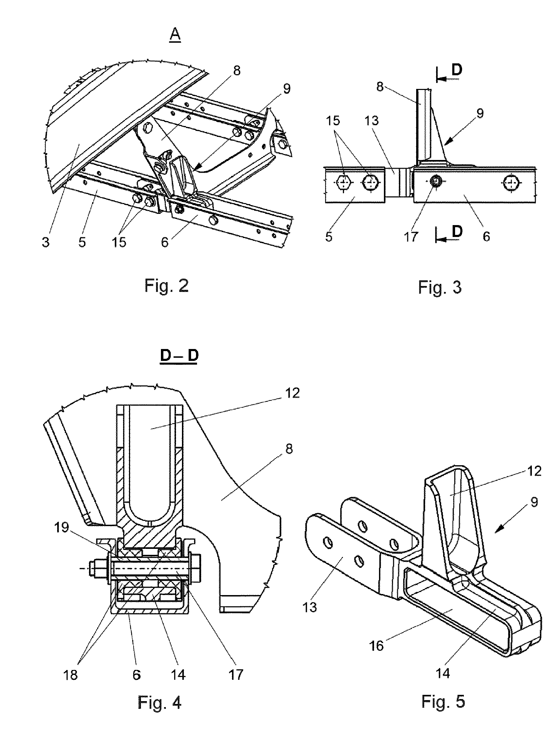

Figures 2 to 4 show location A of the sliding connection of the profiles, and Fig. 5 shows the first bracket separately, used to produce this connection.

The first bracket 9 has one end 12 which is rigidly connected to the main bracket 8 and a second end, containing two sections 13 and 14. Section 13 is disposed between the flanges of the profile 5 and rigidly connected to these flanges by means of fastening means 15, while section 14 is disposed between the flanges of the other profile 6 and has a slot 16 produced therein, through which passes a bolt 17, likewise passing through corresponding openings in the flanges of the profile 6. In the slot 16 is arranged a plastic sleeve 18, consisting of two parts, separated from each other along the axis of the bolt 17, while between the bolt 17 and the plastic sleeve 18 is arranged a rigid sleeve 19, made of aluminium, for example. The length of the sleeve 19 is essentially equal to the distance between the outer surfaces of the flanges of the profile 6. The plastic sleeve 19 ensures a sliding of the profile 6 along the slot 16, while the rigid sleeve 19 prevents excessive compression of the profile 6 when tightening the bolt 17 by a corresponding nut.

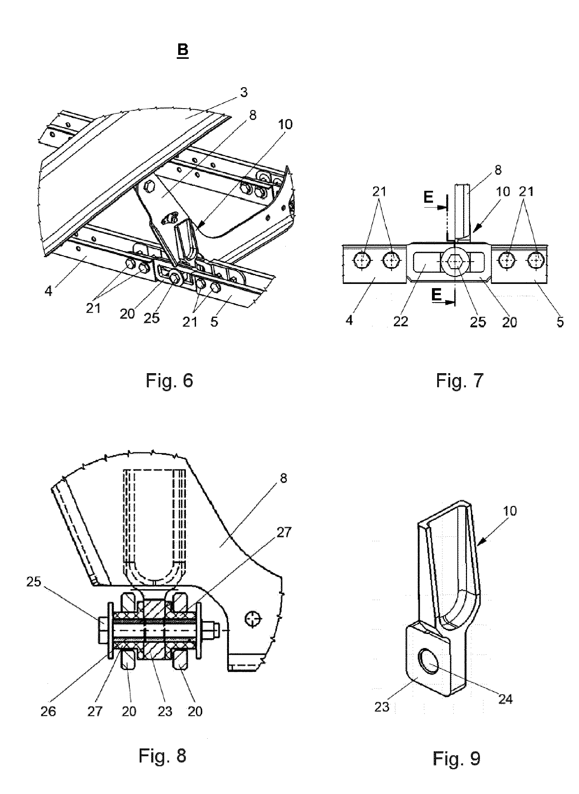

Figures 6 to 8 show location B of the rigid connection of the profiles, while Fig. 9 shows the second bracket separately, which is situated at this location.

Each rigid connection of the profiles 4 and 5 is formed by means of two plates 20, each of which is secured by means of fastening means 21 to the corresponding flanges of abutting profiles 4 and 5. There are longitudinal slots 22 produced in each of the plates 20. Between the plates is disposed a section 23 of the second bracket 10 which has one end rigidly connected to the main bracket 8, and at the other end is disposed the said section 23. In this section 23 there is produced an opening 24, through which passes a bolt 25, likewise passing through corresponding slots 22 in the plates. On the bolt 25 is seated a rigid sleeve 26, the length of which exceeds the distance between the outer surfaces of the two plates 20, while in the slots 22 of these two plates are installed a plastic sleeve 27 for each, through which passes the bolt 25 with rigid sleeve 26 seated thereon.

The plastic sleeves 27 enable a sliding of the second bracket 10 along the slots 22, while the rigid sleeve 26 prevents excessive compression of the plastic sleeves 27 when tightening the bolt 25 by a corresponding nut.

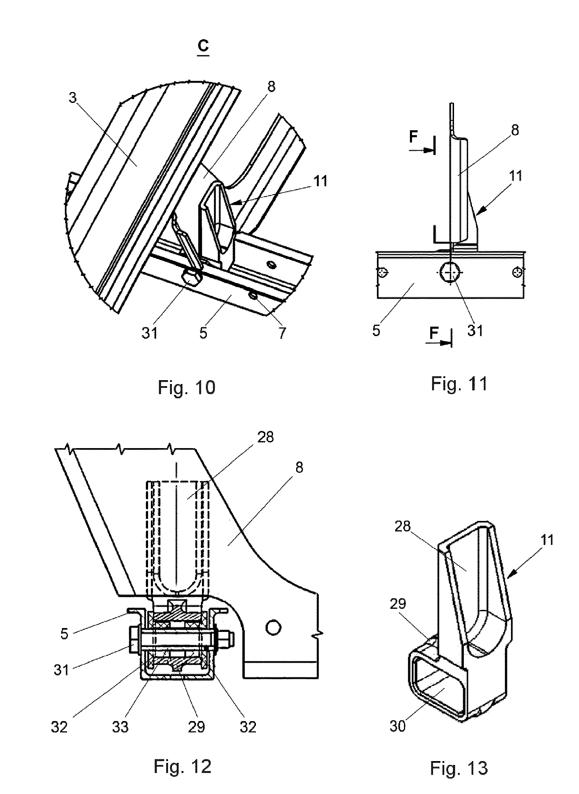

Figures 10 to 12 show the location of the connection of the profile of the system support to the bulkhead at site C between the abutments in the zone of transverse connection of the profiles of the two system supports, while Figure 13 shows the third bracket separately, situated in this location.

The third bracket 11 has one end 28 rigidly connected to the main bracket 8, and the other end containing the section 29, situated between the flanges of the profile 5. In section 29 of the bracket 11 there is produced a slot 30, through which passes the bolt 31, likewise passing through corresponding openings in the flanges of the profile 5. In the slot 30 is arranged a plastic sleeve 32, consisting of two parts, separated from each other along the axis of the bolt 31, while between the bolt 31 and the plastic sleeve 32 is arranged a rigid sleeve 33, made of aluminium, for example. The length of the sleeve 33 is essentially equal to the distance between the outer surfaces of the flanges of the profile 5. The plastic sleeve 32 ensures a sliding of the bracket 8 along the profile 5, while the rigid sleeve 33 prevents excessive compression of the profile 5 when tightening the bolt 31 by a corresponding nut.

The suspension elements 2, including the main brackets 8 attached to the bulkheads 3, and the first, second and third brackets 9, 10 and 11, connecting the main brackets to the system supports 1, transmit to the bulkheads the load in the plane perpendicular to the longitudinal direction of the system supports.

For the transmission to the aircraft skin of the load in the longitudinal direction, the system supports 1 in each of their pairs are joined together by means of fittings 34, which are connected in turn by tie rods 35 to framework elements of the fuselage, in particular, the bulkheads 3 and the skin (not shown). Each fitting 34 is disposed between parallel profiles 5, the flanges of which are rigidly connected to corresponding sections 13 of the first brackets 9. The tie rod 35 is connected by one end to this fitting 34, and by the other end it is connected to the bulkhead 3 to which the first bracket 9 is rigidly connected.

The fastening structure can contain, in particular, two pairs of parallel-arranged system supports (not shown in the drawings), preferably disposed symmetrically in regard to the longitudinal vertical plane of symmetry of the airplane.

The structure for the fastening of components of interior equipment in the passenger compartment of an airplane according to the invention affords the possibility of connecting two neighbouring profiles together with the possibility of regulating their relative position, which makes it possible to compensate for tolerances during the fabrication of parts, during assembly, and so forth, and to compensate for deformation of the fuselage. Furthermore, the sliding connection of the second and third brackets to the system support allows the main brackets, connected to these brackets, to move relative to the profiles of the system support, which substantially decreases the load on the bulkhead in the longitudinal direction.

## Claims

1. Prefabricated structure for fastening the components of equipment inside an airplane fuselage, containing fastening means produced on the fuselage; suspension elements immovably connected to said fastening means, and at least one system support running in the longitudinal direction of the fuselage, connected to the suspension elements, **characterised in that** the suspension elements include at least one first suspension element and at least one second suspension element, wherein each of the first suspension elements is rigidly connected to the system support, and each of the second suspension elements forms with the system support a sliding connection, so that the system support is able to slide relative to these second suspension elements along the longitudinal axis of the airplane fuselage.

2. Structure according to Claim 1, **characterised in that** the system support is formed from several sequentially connected pieces.

3. Structure according to Claim 2, **characterised in that** at least two pieces of the system support are joined together by means of a sliding connection, while the connections of the other pieces of the system support are formed rigidly.

4. Structure according to Claim 3, **characterised in that**, at the locations of the sliding connections of the pieces of the system support, one of these pieces is connected to the first suspension element, while in the other locations the system support is connected to the second suspension elements.

5. Structure according to Claim 4, **characterised in that** each piece of the system support is made in the form of a profile having a U-shape in cross section.

6. Structure according to Claim 5, **characterised in that** each of the first suspension elements includes a first bracket, one end of which is rigidly connected to a corresponding fastening means produced on the fuselage, while the other end contains two sections, one of which is situated between the flanges of one profile and is rigidly connected to these flanges by means of fastening means, while the other of these sections is situated between the flanges of the other profile and has a slot produced in it, through which passes a bolt likewise passing through corresponding openings in the flanges of said other profile.

7. Structure according to Claim 6, **characterised in that** a plastic sleeve is arranged in the slot of the first bracket, through which the bolt passes.

8. Structure according to Claim 7, **characterised in that** the sleeve consists of two parts, separated from each other along the axis of the bolt, while between the bolt and the plastic sleeve is arranged a rigid sleeve, the length of which is essentially equal to the distance between the outer surfaces of the flanges of the profile.

9. Structure according to Claim 5, **characterised in that** each rigid connection of the profiles is formed by means of two plates, each of which is fastened to corresponding flanges of abutting profiles, and in each of which are made longitudinal slots, wherein the system support in the locations of the rigid connections of the profiles is connected to the second suspension elements, each of which includes a second bracket, one end of this second bracket being rigidly connected to a corresponding fastening means produced on the fuselage, while the other end contains a section situated between said plates, and wherein in this section there is produced an opening through which passes a bolt, likewise passing through corresponding slots in the plates.

10. Structure according to Claim 9, **characterised in that** a rigid sleeve is seated on the bolt, the length of which exceeds the distance between the outer surfaces of said two plates, and one plastic sleeve each is placed in the slots of these two plates, through which passes the bolt with the rigid sleeve seated thereon.

11. Structure according to Claim 5, **characterised in that** the second suspension elements include third brackets, one end of each being rigidly connected to corresponding fastening means produced on the fuselage, while the other end contains a section situated between the flanges of the corresponding profile, and wherein in this section there is produced a slot through which passes the bolt, likewise passing through corresponding openings in the flanges of said profile.

12. Structure according to Claim 11, **characterised in that** a plastic sleeve is arranged in the slot of every third bracket, through which the bolt passes.

13. Structure according to Claim 12, **characterised in that** the sleeve consists of two parts, separated from each other along the axis of the bolt, while between the bolt and the plastic sleeve is arranged a rigid sleeve, the length of which is essentially equal to the distance between the outer surfaces of the flanges of the profile.

14. Structure according to any one of Claims 1 to 13, **characterised in that** it contains at least one pair of parallel-arranged system supports.

15. Structure according to Claim 14, **characterised in that** it contains two pairs of parallel-arranged system supports, said pairs of system supports being arranged symmetrically with respect to the longitudinal vertical plane of symmetry of the airplane.

16. Structure according to Claim 14, **characterised in that** the system supports in each of the pairs are joined together by means of fittings, each fitting being disposed between parallel profiles, the flanges of which are rigidly connected to corresponding sections of the first brackets, and connected by tie rods to elements of the fuselage, the tie rod being connected to the element of the fuselage framework on which is produced the fastening means which is rigidly connected to one end of the first bracket.
